# EUROPEAN PATENT APPLICATION

(11) **EP 2 218 554 A1**
(43) Date of publication of application: **18.08.2010**
(21) Application number: 09100108.1
(22) Date of filing: 12.02.2009
(51) Int. Cl.: B25F 5/00, B23B 45/00, B23B 49/02, F16C 33/10

(54) **Hand-held power tool**

(71) Applicant: Robert Bosch GmbH, 70442 Stuttgart (DE)
(72) Inventor: Leong, Chi Hoe, Sungai Ara, Bayan Lepas 11900 (MY); Tan, Eng Hock, Bayan Lepas, Penang 11700 (MY)

(57) **Abstract**

A hand-held power tool comprising an output shaft (20) rotatable along a tool axis of rotation (22) and having a generally cylindrical output shaft outside surface (48), a friction bushing (28) surrounding said output shaft (20) and having a generally cylindrically shaped bushing inner surface (30), wherein the bushing inner surface (30) is provided with at least one recess (50).

## Description

### PRIOR ART

The present invention relates to means for stabilizing the output shaft of a hand-held power tool. One way of stabilizing the rotating shaft of a drill or impact drill/driver is via a friction bushing. This type of bushing is typically relatively inexpensive but does have drawbacks versus a more expensive ball bearing. Heat that is generated when the shaft rotates must be diffused in order to avoid catastrophic failure of the bearing. Since it is more susceptible to heat generation due to friction, the bushing must normally be longer in the axial direction than a ball bearing in order to achieve the same load-carrying capacity. This can adversely affect compactness, weight and balance of the hand-held power tool.

A two-part bushing assembly for use with a drill jig fixture is described in US Patent No. 3,981,604. The first part is a slip renewable bushing having a smooth internal surface for intermittent contact with a rotating drill bit when it is advanced though the bushing assembly. The second part is an outside liner bushing that is provided with longitudinal grooves or slots on its inner surface in order to reduce heat transfer from the internal bushing to the resinous compound of the surrounding mounting plate. A bushing with two parts would not be particularly cost effective for use within a hand-held power tool.

### ADVANTAGES OF THE INVENTION

A hand-held power tool is described which may be, for example, a drill/driver or impact driver. The tool is provided with an output shaft rotatable along a tool axis of rotation and having a generally cylindrical output shaft outside surface, a friction bushing surrounding said output shaft and having a generally cylindrically shaped bushing inner surface. The bushing inner surface is provided with at least one recess. This has the advantage that the friction between the bushing and the output shaft is reduced. As such, there is less generation of heat when the output shaft rotates.

Normally friction bushings need to be long enough to diffuse and distribute heat generated from friction. Therefore a further advantage of incorporating a recess on the bushing inner surface is that the bushing can be designed to be shorter since there will be less heat generated. As a result the length of the tool along its tool rotation axis is reduced. This is known to be commercially desirable.

To reduce wear, it is advantageous to lubricate the space between the bushing and the rotating shaft with grease. However, if the bushing has a recess that traverses its entire axial length, this would allow the grease to easily escape along the tool shaft. Therefore it is advantageous of the bushing has a first and second annular end surface and the at least one recess is contiguous with the first annular surface but not contiguous with the second end surface. If the first annular end surface is oriented away from a tool-retaining end of the output shaft, then the grease is furthermore directed back towards the anvil side of the output shaft. This prolongs the useful lifetime of the grease and is therefore quite desirable.

For ease of manufacture, it is advantageous for the recess to have a generally rectangular shape. Other shapes still provide similar advantages in so far as less contact area means less friction and less heat generation.

The same advantages provided by a single recess can be multiplied if the bushing is provided with a plurality of recesses. So that any wear is symmetrically distributed and for purposes of balance, the plurality of recesses are arranged symmetrically about the tool axis of rotation. This advantageous symmetry is not possible if each of the plurality of recesses is not identically shaped.

Because there is less heat generated when recesses are provided on the bushing inner surface, it is possible to reduce the length of the bushing without compromising its ability to diffuse heat generated from friction. In an exemplary embodiment, the bushing has an axial length which is approximately eighty percent of a diameter of the inner surface of the bushing. With further optimization according to the invention, it should be possible to reduce the length of the bushing further so that it has an axial length which is less than eighty percent of a diameter of the inner surface of the bushing.

The advantages of providing a bushing with recesses are potentially useful for any friction bushing used to support the load of a rotating shaft in a power tool. However, these advantages are especially pronounced if there are further stresses on the output shaft. In the case of an impact driver having a striker for providing torque to the output shaft, there is a supplementary need to support the output shaft since it is unitary with the anvil that is to be struck with great force by the striker in high torque situations. Therefore in prior art impact drivers incorporating bushings, the nose of the tool needed to be elongated to provide such support with a friction bushing. The invention described herein overcomes this disadvantage.

### DRAWINGS

Figure 1 is a section view of a nose portion of a hand-held power tool according to the present invention.
Figure 2 is a perspective view of a bushing according to the present invention.
Figure 3 is a section view of the bushing according to Figure 2.

### DESCRIPTION OF THE PREFERRED EMBODIMENTS

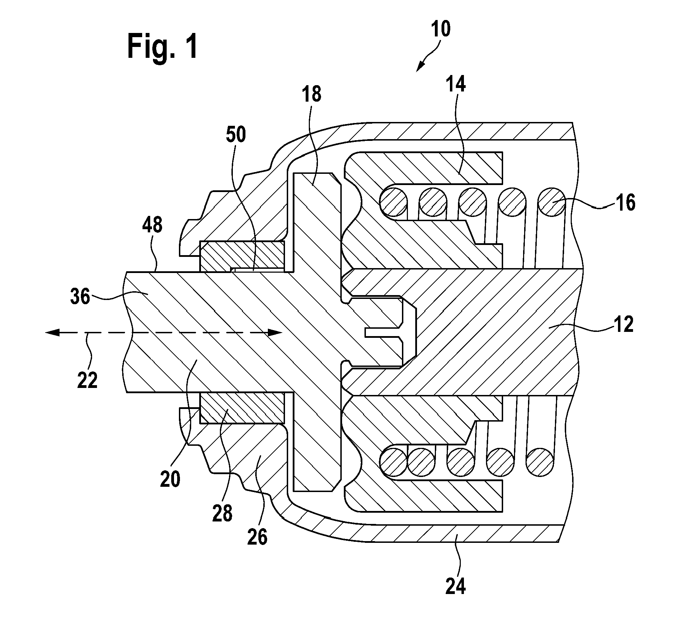

Just the nose portion 10 of a hand-held power tool of the sort used for drilling and/or driving is shown in Fig. 1. Essential components of these tools that are not relevant to the invention, such as a handle, motor, gearbox and motor housing, are not illustrated. The hand-held power tool may be provided either with a cord for drawing AC power or may incorporate an intrinsic or removable rechargeable DC battery.

Torque from the motor is transmitted via a gear assembly to an intermediate shaft 12. Since the illustrated hand-held power tool is an impact driver, it is provided with a conventional impact mechanism assembly comprising among other things a striker 14, a spring 16 and an anvil 18 for providing high torque impacts. Anvil 18 is integral with an output shaft 20 which rotates around a tool axis of rotation 22 and which is provided means for retaining a tool having a conventional male or female attachment interface (not shown). Such tool retention means are well known in the art.

Surrounding the impact mechanism is a striker housing 24 which in the illustrated example is unitary with a nose housing 26 which is forward of the impact mechanism. In alternative embodiments, these housings need not be contiguous. Nose housing 26 embraces a friction bushing 28 formed from sintered metal in a manner which restricts it from rotating. Bushing 28 in turn embraces output shaft 20 which rotates within and is supported by bushing 28 when the tool is operating.

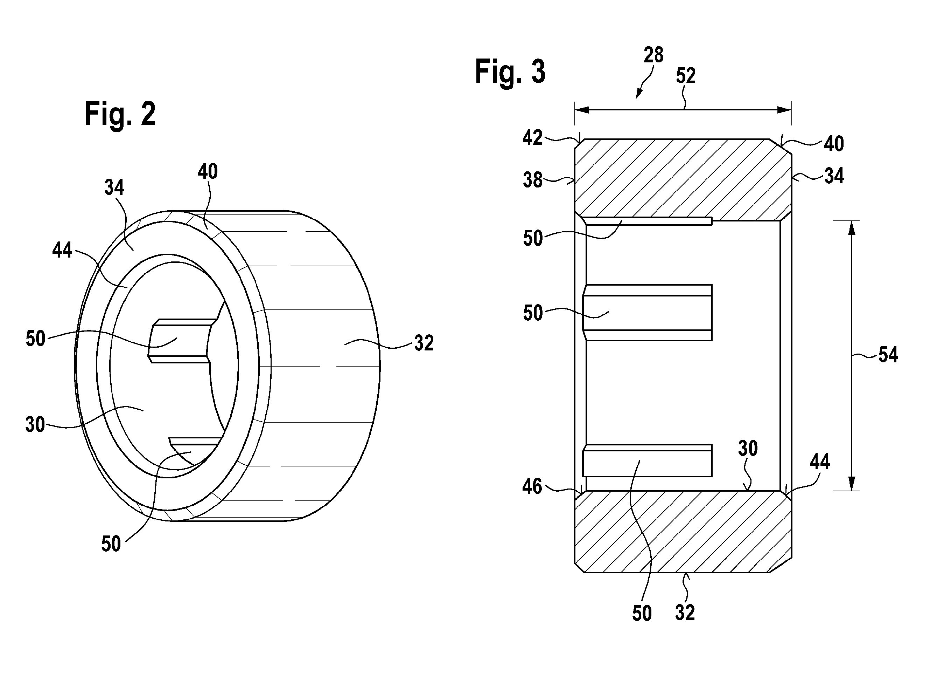

Detailed structure of friction bushing 28 is seen more clearly in Figs. 2 and 3. Friction bushing 28 has generally the shape of a hollow cylinder with an inner surface 30 and an outer surface 32 that are each generally cylindrical in shape. A forward annular end surface 34 is oriented facing the tool retaining end 36 of output shaft 20 and a rear annular end surface 38 is oriented facing anvil 18. The interfaces between outer surface 32 and the annular ends 34 and 38 are optionally chamfered to form respective annular chamfered surfaces 40 and 42. Likewise the interfaces between inner surface 30 and annular ends 34 and 38 may be chamfered to form respective annular chamfered surfaces 44 and 46. Such chamfered surfaces might facilitate assembly of the various components of the hand-held power tool.

It is understood that inner surface 30 of friction bushing 28 is in close proximity with generally cylindrically shaped outer surface 48 of output shaft 20 for stabilizing the rotation of this shaft. As is customary in the art, grease is provided in between these surfaces for lessening the friction and protecting the parts against wear. With extended use of such a hand-held power tool, this grease tends to escape the tool via a slow diffusion towards tool-retaining end 36.

Inner surface 30 is provided with five identically-shaped recesses 50 which are arranged symmetrically with respect to tool axis of rotation 22. Each recess 50 is generally rectangular in shape, but curved such that its shape corresponds to an arc-shaped wedge along inner surface 30. Each recess 50 extends approximately along two-thirds of the axial length 52 of bushing 28 with respect to tool axis of rotation 22. Since less of inner surface 30 is in close proximity to outer surface 48, there is less friction between the parts when output shaft 20 rotates.

Each recess 50 is furthermore contiguous with rear annular end surface 38 so that even when output shaft 20 is positioned within bushing 28 (see Fig. 1), grease can easily flow between the portion of output shaft 20 nearest anvil 18 into the recesses 50. However, since recesses 50 are not contiguous with front annular end surface 34, grease within recesses 50 could not as easily travel in the direction of tool-retaining end 36. Hence each recess 50 may serve as a reservoir for retaining grease.

Recesses 50 need not be rectangularly shaped, although such a shape tends to facilitate manufacture. Other shapes, such as rounded or trapezoidal shapes are of course possible. Although five recesses 50 are provided in the illustrated example, fewer recesses, such as one, two, three or four recesses are possible. Also more recesses, such as six, seven, eight, nine, ten or more recesses are possible. The choice of five represents a compromise between the ability to stabilize output shaft 20, the desirability of less friction, and the ability of the recesses to store and distribute grease. For example, if five recesses were combined into two larger recesses with comparable surface area, the stabilization capability may be compromised. However, the more recesses are used, the more resistance to flow of grease as the arc length of the recesses is reduced.

Because there is less heat generation due to the incorporation of the recesses, it is possible to reduce axial length 52 of bushing 28 to be approximately 80 percent of a diameter 54 of inner surface 30. Depending on the requirements for stability and heat generation in a particular hand-held power tool, it should be possible to vary the number and size of recesses 50 so that still shorter axial lengths 52 less than 80 percent of diameter 54 are possible without compromising performance.

## Claims

1. A hand-held power tool comprising:
a output shaft (20) rotatable along a tool axis of rotation (22) and having a generally cylindrical output shaft outside surface (48);
a friction bushing (28) surrounding said output shaft (20) and having a generally cylindrically shaped bushing inner surface (30);
**characterized in that** the bushing inner surface (30) is provided with at least one recess (50).

2. A hand-held power tool according to claim 1, **characterized in that** the bushing (28) has a first and second annular end surface (34, 38) and the at least one recess (50) is contiguous with the first annular surface (38) but not contiguous with the second end surface (34).

3. A hand-held power tool according to any one of the preceding claims, **characterized in that** the first annular end surface (38) is oriented away from a tool-retaining end (36) of the output shaft (20).

4. A hand-held power tool according to any one of the preceding claims, **characterized in that** recess (50) has a generally rectangular shape.

5. A hand-held power tool according to any one of the preceding claims, **characterized in that** the recess (50) is provided with grease.

6. A hand-held power tool according to any one of the preceding claims, **characterized in that** the bushing inner surface (30) is provided with a plurality of recesses (50).

7. A hand-held power tool according to claim 6, **characterized in that** the plurality of recesses (50) are identically shaped.

8. A hand-held power tool according any one of claims 6 or 7, **characterized in that** the plurality of recesses (50) are arranged symmetrically about the tool axis of rotation (22).

9. A hand-held power tool according to any one of the preceding claims, **characterized in that** bushing (28) has an axial length (52) which is less than or equal to approximately eighty percent of a diameter (54) of the inner surface (30) of the bushing (28).

10. A hand-held power tool according to any one of the preceding claims, **characterized in that** the hand-held power tool is an impact driver having a striker (14) for providing torque to the output shaft (20).
